# EUROPEAN PATENT APPLICATION

(11) **EP 4 454 790 A1**
(43) Date of publication of application: **30.10.2024**
(21) Application number: 24167764.0
(22) Date of filing: 28.03.2024
(51) Int. Cl.: B22F 10/36, B22F 10/28, B22F 10/37, B22F 12/90, B33Y 10/00, B33Y 30/00, B33Y 50/02

(54) **THREE DIMENSIONAL POWDER BED FUSION ADDITIVE MANUFACTURING APPARATUS AND METHOD FOR CONTROLLING THREE DIMENSIONAL POWDER BED FUSION ADDITIVE MANUFACTURING APPARATUS**

(30) Priority: 10.04.2023 JP 2023063587
(71) Applicant: Jeol Ltd., Akishima-shi, Tokyo 196-8558 (JP)
(72) Inventor: TSUTAGAWA, Nari, Tokyo, 196-8558 (JP); KITAMURA, Shinichi, Tokyo, 196-8558 (JP)
(74) Representative: Boult Wade Tennant LLP

(57) **Abstract**

A three-dimensional PBF-AM apparatus (1) includes: a build plate (22); a powder supply device (16); a beam irradiation device (2); a detection unit (46); and a control unit (104) that controls the powder supply device (16) and the beam irradiation device (2).

The control unit (104) acquires a post-melting-of-preceding-layer backscattered electron signal that is a backscattered electron signal detected by the detection unit (46) after the powder material (32) was melted by the electron beam (15) in the step of building the layer preceding the current layer. Then, on the basis of the post-melting-of-preceding-layer backscattered electron signal, the control unit (104) sets conditions for controlling the beam irradiation device (2) in the melting step in the step of building the current layer.

## Description

### BACKGROUND

### Technical Field

The present invention relates to a three-dimensional powder bed fusion additive manufacturing (PBF-AM) apparatus and a method for controlling a three-dimensional PBF-AM apparatus.

### Related Art

These days, three-dimensional PBF-AM technology in which layers each obtained by thinly spreading a powder material are superimposed one by one to perform building is in the limelight, and many types of three-dimensional PBF-AM technology are developed based on varieties of materials of the powder material and build techniques.

As a build method of a conventional three-dimensional PBF-AM apparatus, for example, layers of a powder material are spread one by one on a base plate installed on the upper surface of a stage. Next, for the powder material spread over the base plate, only a two-dimensional structure portion corresponding to a cross section of a build object is melted by a heating mechanism using an electron beam or a laser. Then, such layers of powder material are stacked one by one in the height direction (Z direction), and thereby a build object is formed (see, for example, Patent Literature 1).

### Citation List

### Patent Literature

Patent Literature 1: JP 2022-138653 A

### SUMMARY

However, in the conventional three-dimensional PBF-AM apparatus, it has been the case that, when the powder material is not appropriately spread during the build step, the build operation is temporarily stopped and the work of spreading the powder material is performed again. Thus, the conventional three-dimensional PBF-AM apparatus has had a problem that the throughput achieved in the build operation is deteriorated.

In view of the above problem, an object of the present invention is to provide a three-dimensional PBF-AM apparatus and a method for controlling a three-dimensional PBF-AM apparatus that can perform correction work without deteriorating throughput.

In order to solve the above problems and achieve the object of the present invention, a three-dimensional PBF-AM apparatus of the present invention includes: a build plate; a powder supply device that supplies a powder material to the build plate to form a powder layer; and a beam irradiation device that irradiates the powder layer with an electron beam. Further, the three-dimensional PBF-AM apparatus includes: a detection unit that detects backscattered electrons generated when the electron beam is applied to the powder material; and a control unit that controls the beam irradiation device.

The control unit acquires a post-melting-of-preceding-layer backscattered electron signal that is a backscattered electron signal detected by the detection unit after the powder material was melted by the electron beam in the step of building the layer preceding the current layer. Then, on the basis of the post-melting-of-preceding-layer backscattered electron signal, the control unit sets conditions for controlling the beam irradiation device in the melting step in the step of building the current layer.

A three-dimensional PBF-AM method of the present invention includes steps shown in (1) to (3) below.
(1) A step of using the powder supply device to supply a powder material to the build plate to form a powder layer.
(2) A step of acquiring a post-melting-of-preceding-layer backscattered electron signal that is a backscattered electron signal detected by the detection unit after the powder material was melted by an electron beam in the step of building the layer preceding the current layer.
(3) A melting step of using the beam irradiation device to irradiate the powder layer with an electron beam to melt the powder material.

Then, on the basis of the post-melting-of-preceding-layer backscattered electron signal, conditions for controlling the beam irradiation device in the melting step in the step of building the current layer are set.

By using a three-dimensional PBF-AM apparatus and a method for controlling a three-dimensional PBF-AM apparatus of the present invention, correction work can be performed without deteriorating throughput.

### BRIEF DESCRIPTION OF DRAWINGS

FIG. 1 is a schematic cross-sectional view schematically showing a three-dimensional PBF-AM apparatus according to an embodiment of the present invention;
FIG. 2 is a block diagram showing a configuration example of a control system of the three-dimensional PBF-AM apparatus according to the embodiment of the present invention;
FIG. 3 is a plan view showing positions of detection units in the three-dimensional PBF-AM apparatus according to the embodiment of the present invention;
FIG. 4 is a flowchart showing an operation example in the three-dimensional PBF-AM apparatus according to the embodiment of the present invention;
FIG. 5 shows an example of a backscattered electron image acquired after powder-heating;
FIG. 6 is a backscattered electron image acquired after powder-heating, and shows an example in which a powder material is not appropriately spread; and
FIG. 7 is a backscattered electron image acquired after melting, and shows an example in which a powder material is melted.

### DETAILED DESCRIPTION

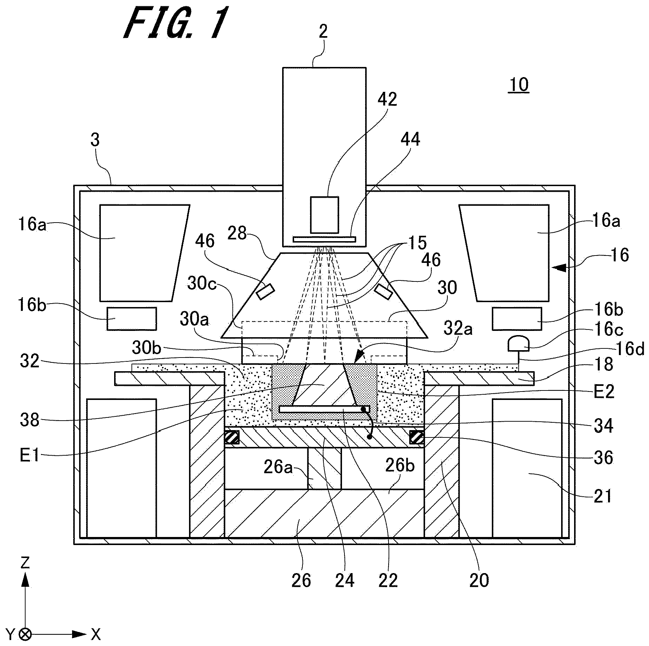

Hereinbelow, embodiments of a three-dimensional PBF-AM apparatus and a method for controlling a three-dimensional PBF-AM apparatus of the present invention are described with reference to FIGS. 1 to 7. In the drawings, common members are denoted by the same reference numerals.

### 1. Embodiments

### 1-1. Configuration of a three-dimensional PBF-AM apparatus

First, a first embodiment of a three-dimensional PBF-AM apparatus according to an embodiment (hereinafter, referred to as the "present example") of the present invention is described with reference to FIG. 1.

FIG. 1 is a schematic cross-sectional view schematically showing a three-dimensional PBF-AM apparatus of the present example. In the following description, in order to clarify the shape, positional relationship, etc. of each part of the three-dimensional PBF-AM apparatus, the left-right direction of FIG. 1 is referred to as an X direction, the depth direction of FIG. 1 is referred to as a Y direction, and the up-down direction of FIG. 1 is referred to as a Z direction. The X direction, the Y direction, and the Z direction are directions orthogonal to each other. The X direction and the Y direction are directions parallel to the horizontal direction, and the Z direction is a direction parallel to the vertical direction.

A three-dimensional PBF-AM apparatus 1 shown in FIG. 1 is, for example, an apparatus that applies an electron beam to a powder material made of a metal powder of titanium, aluminum, iron, or the like to melt the powder material, stacks layers in each of which the powder material is solidified, and thus builds a three-dimensional object.

As shown in FIG. 1, the three-dimensional PBF-AM apparatus 1 includes a vacuum chamber 3, a beam irradiation device 2, a powder supply device 16, a build table 18, a build box 20, and a collection box 21. Further, the three-dimensional PBF-AM apparatus 1 includes a build plate 22, an inner base 24, a plate movement device 26, a radiation shielding cover 28, an electron shield 30, a camera 42, and a shutter 44. Further, the three-dimensional PBF-AM apparatus 1 includes a plurality of detection units 46 that detect backscattered electrons.

The vacuum chamber 3 is a chamber for creating a vacuum state by evacuating air in the chamber with a not-illustrated vacuum pump.

The beam irradiation device 2 is a device that applies an electron beam 15 to the build plate 22 or a build surface 32a of a powder layer formed of a powder material 32. The build surface 32a corresponds to the upper surface of the powder layer. The state of the powder layer changes as the process of three-dimensional PBF-AM proceeds. Although not illustrated, the beam irradiation device 2 includes an electron gun serving as a source of generation of the electron beam 15, a focusing lens that focuses the electron beam generated by the electron gun, and a deflecting lens that deflects the electron beam 15 focused by the focusing lens. The focusing lens is formed of a focusing coil, and focuses the electron beam 15 by a magnetic field generated by the focusing coil. The deflecting lens is formed of a deflecting coil, and deflects the electron beam 15 by a magnetic field generated by the deflecting coil.

The powder supply device 16 is a device that supplies, as an example of a powder material serving as a source material of a build object 38, a powder material 32 onto the build plate 22 to form a powder layer. The powder supply device 16 includes a hopper 16a, a powder dropper 16b, and a recoater 16c. The hopper 16a is a chamber for storing metal powder. The powder dropper 16b is a device that drops the powder material 32 stored in the hopper 16a onto the build table 18. The recoater 16c is a long-length member long in the Y direction, and includes a blade 16d for powder spreading. The recoater 16c spreads the powder material 32 dropped by the powder dropper 16b over the build table 18. The recoater 16c is provided to be movable in the X direction in order to spread the powder material 32 over the entire surface of the build table 18.

The build table 18 is horizontally placed inside the vacuum chamber 3. The build table 18 is placed below the powder supply device 16. A central portion of the build table 18 is opened. The opening shape of the build table 18 is a circular shape in a planar view or an angular shape in a planar view (for example, a quadrangular shape in a planar view).

The build box 20 is a box that forms a space for building. An upper end portion of the build box 20 is connected to the opening edge of the build table 18. A lower end portion of the build box 20 is connected to the bottom wall of the vacuum chamber 3.

The collection box 21 is a box that collects, out of the powder material 32 supplied onto the build table 18 by the powder supply device 16, the powder material 32 supplied more than necessary.

The build plate 22 is a plate for forming a build object 38 by using the powder material 32. The build object 38 is formed by stacking on the build plate 22. The build plate 22 is formed in a circular shape in a planar view or an angular shape in a planar view according to the opening shape of the build table 18. The build plate 22 is connected (grounded) to the inner base 24 by a ground wire 34 so as not to be in an electrically floating state. The inner base 24 is held at the GND (ground) potential. The powder material 32 is spread over the build plate 22 and the inner base 24.

The inner base 24 is provided to be movable in the up-down direction (Z direction). The build plate 22 moves in the up-down direction integrally with the inner base 24. The inner base 24 has a larger outer dimension than the build plate 22. The inner base 24 slides in the up-down direction along the inner surface of the build box 20. A sealing member 36 is attached to an outer peripheral portion of the inner base 24. The sealing member 36 is a member that maintains slidability and sealability between the outer peripheral portion of the inner base 24 and the inner surface of the build box 20. The sealing member 36 is formed of a material having heat resistance and elasticity.

The plate movement device 26 is a device that moves the build plate 22 and the inner base 24 in the up-down direction. The plate movement device 26 includes a shaft 26a and a drive mechanism unit 26b. The shaft 26a is connected to the lower surface of the inner base 24. The drive mechanism unit 26b includes a not-illustrated motor and a not-illustrated power transmission mechanism; and uses the motor as a drive source to drive the power transmission mechanism, and thereby moves the build plate 22 and the inner base 24 in the up-down direction integrally with the shaft 26a. The power transmission mechanism is formed of, for example, a rack and pinion mechanism, a ball screw mechanism, or the like.

The radiation shielding cover 28 is placed between the build plate 22 and the beam irradiation device 2 in the Z direction. The radiation shielding cover 28 is formed of a metal such as stainless steel. The radiation shielding cover 28 blocks radiant heat generated when the powder material 32 is irradiated with the electron beam 15 by the beam irradiation device 2. When the powder material 32 is irradiated with the electron beam 15 in order to primarily sinter the powder material 32, the powder material 32 is melted; if heat radiated at this time from the build surface 32a of the powder layer, that is, radiant heat is diffused over a large area in the vacuum chamber 3, thermal efficiency is deteriorated. In contrast, in the case where the radiation shielding cover 28 is placed above the build plate 22, heat radiated from the build surface 32a is blocked by the radiation shielding cover 28, and the blocked heat is reflected by the radiation shielding cover 28 and returned to the build plate 22 side. Thus, heat generated by irradiation with the electron beam 15 can be efficiently utilized.

Further, the radiation shielding cover 28 has a function of suppressing adhesion (vapor deposition) to the inner wall of the vacuum chamber 3 of vaporized substances generated when the powder material 32 is irradiated with the electron beam 15. When the powder material 32 is irradiated with the electron beam 15, part of the melted metal becomes an atomized vaporized substance, and rises from the build surface 32a. The radiation shielding cover 28 is placed to cover a space above the build surface 32a so that the vaporized substance does not diffuse in the vacuum chamber 3.

The electron shield 30 has an opening 30a and a mask portion 30b. When forming a build object 38, the electron shield 30 is placed to cover the upper surface of the powder material 32, that is, the build surface 32a. At this time, the opening 30a exposes the powder material 32 spread over the build plate 22, and the mask portion 30b shields the powder material 32 positioned outside the opening 30a. The shape of the opening 30a is set according to the shape of the build plate 22. For example, when the build plate 22 is in a circular shape in a planar view, the shape in a planar view of the opening 30a is set in a circular shape accordingly, and when the build plate 22 is in an angular shape in a planar view, the shape in a planar view of the opening 30a is set in an angular shape accordingly.

The electron shield 30 is placed below the radiation shielding cover 28. The opening 30a and the mask portion 30b of the electron shield 30 are placed between the build plate 22 and the radiation shielding cover 28 in the Z direction. The electron shield 30 has an enclosure portion 30c. The enclosure portion 30c is placed to surround a space above the opening 30a. Part (an upper portion) of the enclosure portion 30c overlaps the radiation shielding cover 28 in the Z direction. The enclosure portion 30c has a function of blocking radiant heat generated from the build surface 32a and a function of suppressing diffusion of vaporized substances generated from the build surface 32a. That is, the enclosure portion 30c has similar functions to the radiation shielding cover 28.

The electron shield 30 is formed of a metal having a higher melting point than the powder material 32 used as a source material of the build object 38. Further, the electron shield 30 is formed of a material having low reactivity with the powder material 32. Examples of the material of the electron shield 30 include titanium. The electron shield 30 may be formed of a metal of the same material as the powder material 32 used. The electron shield 30 is electrically grounded to the GND. When temporarily sintering the powder material 32 by irradiation with the electron beam 15 in a preheating step before a primary sintering step described later, the electron shield 30 exerts an electrical shielding function, and thereby suppresses the occurrence of powder scattering to a small scale.

The camera 42 is a camera capable of photographing the build surface 32a of the powder layer. The position of the camera 42 is placed to be shifted in the Y direction from the position of the beam irradiation device 2 so as not to interfere with the position of the beam irradiation device 2. The camera 42 is, for example, preferably formed of a visible light camera such as a digital video camera. The camera 42 photographs the build surface 32a of the powder layer to generate an image (image data) of the powder layer. Thus, the image generated by the camera 42 is an image indicating the state of the build surface 32a of the powder layer. Photographing by the camera 42 is performed in a state where illumination light emitted by an illumination light source (not illustrated) included in the three-dimensional PBF-AM apparatus 1 is applied to the build surface 32a of the powder layer.

The shutter 44 protects the camera 42 and an observation window so that vaporized substances generated from the build surface 32a when the powder material 32 is melted by irradiation with the electron beam 15 do not adhere to the camera 42 or the observation window. The photographing of the build surface 32a by the camera 42 is performed in a state where the shutter 44 is opened. In a step in which vaporized substances are likely to be generated or a step in which the amount of vaporized substances generated is large, that is, when melting the powder material 32 with the electron beam 15, the shutter 44 is closed.

The plurality of detection units 46 that detect backscattered electrons are placed below the beam irradiation device 2.

Specifically, the detection unit 46 is placed between the beam irradiation device 2 and the build surface 32a of the build object 38 formed on the build plate 22.

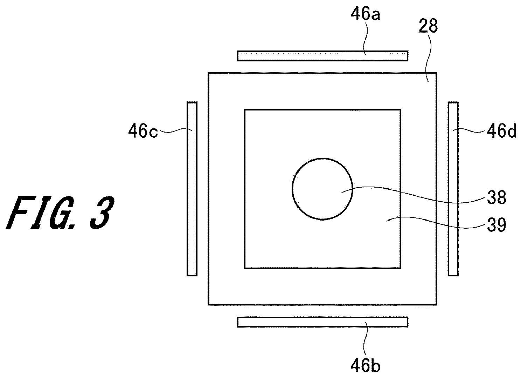

FIG. 3 is a plan view showing positions of detection units 46.

As shown in FIG. 3, a plurality of detection units 46a, 46b, 46c, and 46d are arranged to surround the periphery of the build object 38. A first detection unit 46a is placed on one side in the X direction of the build object 38, and a second detection unit 46b is placed on the other side in the X direction of the build object 38. The first detection unit 46a and the second detection unit 46b face each other across the build object 38. A third detection unit 46c is placed on one side in the Y direction of the build object 38, and a fourth detection unit 46d is placed on the other side in the Y direction of the build object 38. The third detection unit 46c and the fourth detection unit 46d face each other across the build object 38.

Although an example in which a plurality of detection units 46 are arranged has been described, the present invention is not limited thereto, and the number of detection units 46 may be one, or three or less, or five or more.

The detection unit 46 is not limited to a semiconductor detector or the like, and may be a Ti electrode or the like having a small rate of secondary electron emission based on electronic excitation. Further, as the detection unit 46, backscattered electrons incident on an electrode may be detected as a current by a current detection amplifier, and an increase or decrease in current may be detected.

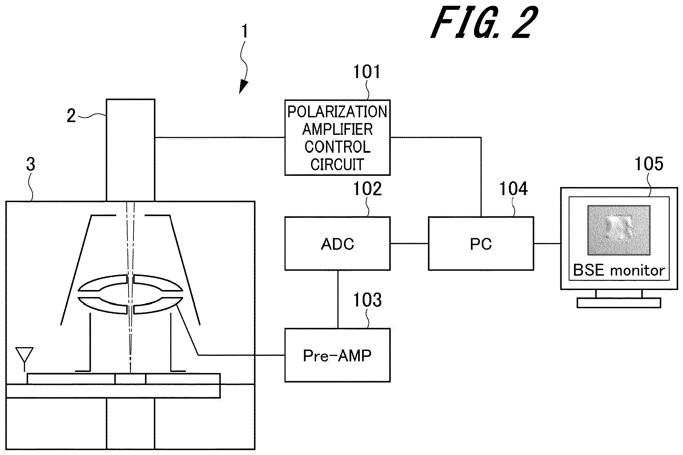

FIG. 2 is a block diagram showing a configuration example of a control system of the three-dimensional PBF-AM apparatus 1 of the present example.

As shown in FIG. 2, the three-dimensional PBF-AM apparatus 1 includes: a polarization amplifier control circuit 101 indicating an electron beam control unit; an analog-digital conversion circuit (ADC) 102; a preamplifier (Pre-AMP) 103; a personal computer (PC) 104 indicating an example of a control unit; and a display unit 105.

The polarization amplifier control circuit 101 is connected to the beam irradiation device 2 and the PC 104. The polarization amplifier control circuit 101 controls the beam irradiation device 2 on the basis of set beam scanning information. Thereby, the beam irradiation device 2 applies the electron beam 15 to a predetermined position. Further, the polarization amplifier control circuit 101 transmits, to the PC 104, beam irradiation position information indicating the position of irradiation with the electron beam 15.

The Pre-AMP 103 is connected to the detection unit 46 and the ADC 102. The Pre-AMP 103 converts a backscattered electron current detected by the detection unit 46 from a current signal to a voltage signal. The voltage signal converted by the Pre-AMP 103 is transmitted to the ADC 102. The ADC 102 converts the backscattered electron signal as a voltage signal from an analog signal to a digital signal, and transmits the digital signal to the PC 104.

The PC 104 includes a not-illustrated image processing unit and a not-illustrated storage unit. The image processing unit of the PC 104 captures an image generated by the camera 42, and performs predetermined image processing on the captured image. Then, the PC 104 outputs, to the display unit 105, the camera image subjected to image processing by the image processing unit.

The camera image generated by the image processing unit is stored in the storage unit. Further, the beam irradiation position information transmitted from the polarization amplifier control circuit 101 is stored in the storage unit. Further, a plurality of arithmetic expressions for performing arithmetic processing on backscattered electron signals acquired from the plurality of detection units 46a, 46b, 46c, and 46d are stored in the storage unit.

The PC 104 selects, according to the build step, a predetermined arithmetic expression from a plurality of arithmetic expressions. Then, the PC 104 uses the selected arithmetic expression to perform arithmetic processing on the backscattered electron signal, and calculates an arithmetic signal. Then, the image processing unit converts the arithmetic signal into an image, and acquires a backscattered electron image (BSE image). The PC 104 outputs the acquired backscattered electron image (BSE image) to the display unit 105. Further, the backscattered electron image (BSE image) is stored in the storage unit.

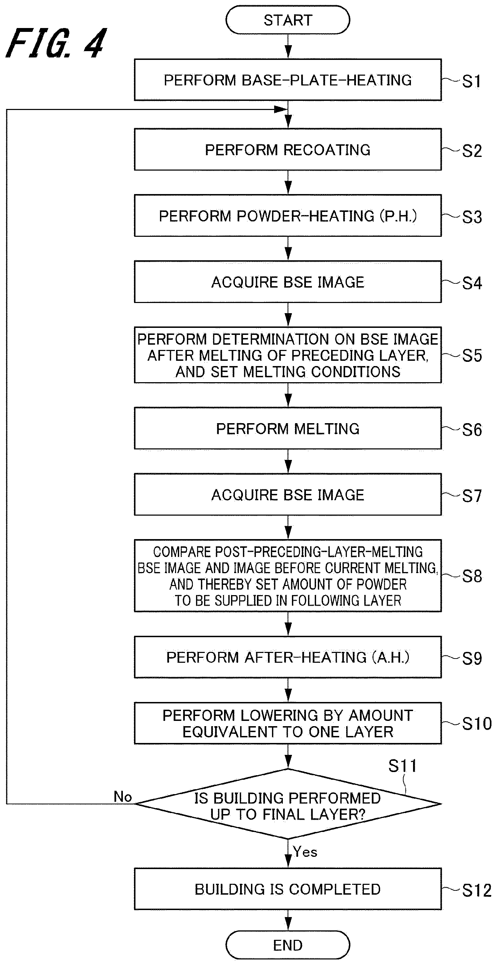

The display unit 105 is formed of, for example, a display such as a liquid crystal display device (LCD) or an organic ELD (electro-luminescence display). The display unit 105 displays the BSE image and the camera image outputted from the PC 104 on a display screen 106 (see FIG. 4, etc.).

### 1-2. Operation example of the three-dimensional PBF-AM apparatus

Next, an operation example of the three-dimensional PBF-AM apparatus 1 having the above-described configuration is described with reference to FIG. 4.

FIG. 4 is a flowchart showing an operation example of the three-dimensional PBF-AM apparatus 1.

As shown in FIG. 4, the beam irradiation device 2 operates on the basis of a control command given from the PC 104, and thereby heats the build plate 22 (step S1). In step S1, the beam irradiation device 2 irradiates the build plate 22 with the electron beam 15 through the opening 30a of the electron shield 30, and scans the electron beam 15 over the build plate 22. Thereby, the build plate 22 is heated to such a temperature that the powder material 32 is temporarily sintered.

Next, the powder material 32 is spread over the build plate 22 (step S2). In step S2, the plate movement device 26 operates on the basis of a control command given from the PC 104, and thereby lowers the build plate 22 by a predetermined amount. The plate movement device 26 lowers the inner base 24 by a predetermined amount so that the upper surface of the build plate 22 is slightly lower than the upper surface of the powder material 32 spread over the build table 18. At this time, the build plate 22 lowers by a predetermined amount together with the inner base 24.

Then, the powder supply device 16 uses the powder dropper 16b to drop, onto the build table 18, the powder material 32 supplied from the hopper 16a to the powder dropper 16b, and then moves the recoater 16c from one end side to the other end side in the X direction to spread the powder material 32 over the inner base 24. At this time, the powder material 32 is spread over the build table 18 with a thickness corresponding to ΔZ. The excess powder material 32 is collected in the collection box 21.

At this time, the amount of the powder material 32 set in the process of step S8 of the preceding layer is spread. For example, in the case where, in step S8 of the preceding layer, the PC 104 determined that the powder material 32 was not appropriately spread, an amount equivalent to two layers of the powder material 32 is spread.

Next, the beam irradiation device 2 operates on the basis of a control command given from the polarization amplifier control circuit 101 and the PC 104, and thereby performs what is called powder-heating (P.H.), which is preheating of the powder layer on the build plate 22 (step S3). In this step S3, the powder layer is preheated in order to temporarily sinter the powder material 32. When the powder material 32 is temporarily sintered, the powder material 32 can be provided with conductivity. Thus, powder scattering in a primary sintering step performed after the preheating step can be suppressed.

In step S3, the beam irradiation device 2 irradiates the powder material 32 on the build plate 22 with the electron beam 15. The beam irradiation device 2 scans the electron beam 15 over an area larger than a region (hereinafter, also referred to as a "build region") for forming a build object 38. Thereby, both the powder material 32 present in the build region and the powder material 32 present around the build region are temporarily sintered.

In the case where, in step S8 of the preceding layer, the PC 104 determined that the powder material 32 was not appropriately spread, an amount equivalent to two layers of the powder material is spread in step S2.

Thus, the time of powder-heating in step S3 is set longer than that in the normal case. Thereby, the full amount equivalent to two layers of the powder material 32 can be temporarily sintered.

Next, a backscattered electron image (BSE image) before melting is acquired (step S4). In step S4, first, the beam irradiation device 2 operates on the basis of a control command given from the polarization amplifier control circuit 101 and the PC 104, and thereby scans the electron beam 15 over a temporarily sintered region where the temporarily sintered powder material 32 is present. At this time, the beam irradiation device 2 sets the electron beam current of the electron beam 15 as small as possible, and performs irradiation while placing the focus on the build surface 32a. Then, the detection unit 46 detects backscattered electrons generated by the electron beam 15.

Further, the detection unit 46 outputs the detected backscattered electron signal to the PC 104 via the Pre-AMP 103 and the ADC 102. Then, the image processing unit of the PC 104 performs arithmetic processing on the backscattered electron signal (backscattered electron information) acquired from the detection unit 46, and acquires a backscattered electron image (BSE image). Further, the image processing unit stores the acquired BSE image before melting in the storage unit.

Next, the PC 104 performs determination on the BSE image after melting of the preceding layer, and sets melting conditions to be used in step S6 described later (step S5). The melting conditions are conditions for controlling the beam irradiation device 2 in the melting step of step S6 described later. In step S5, the PC 104 acquires, from the storage unit, the BSE image acquired in step S7 when the preceding layer was formed (hereinafter, referred to as a post-preceding-layer-melting BSE image). The determination of the post-preceding-layer-melting BSE image may use, for example, unevenness analysis of the build surface 32a. That is, the frequency of unevenness is detected; when the frequency is higher than a threshold, the situation is determined as unmelted, and when the frequency is lower than a threshold, the situation is determined as overmelted. Then, according to the degree of melting of the powder material 32, the PC 104 sets melting conditions such as the irradiation spot diameter and the scanning speed of the electron beam 15, and the value of thermal energy supplied by the electron beam 15.

In the case where, in step S8 of the preceding layer, the PC 104 determined that the powder material 32 was not appropriately spread, an amount equivalent to two layers of the powder material 32 is spread in step S2. Thus, the PC 104 sets melting conditions such that an amount equivalent to two layers of the powder material 32 can be melted.

The step of setting melting conditions of step S5 may be performed during the period from when the post-melting BSE image in step S7 described later during the work of building the preceding layer was acquired to when the melting step of step S6 in the work of building the current layer is performed.

Next, the beam irradiation device 2 operates on the basis of the melting conditions set in step S5, and thereby primarily sinters (melts) the powder material 32 by melting and solidification (step S6). In step S6, by the above process in which the temporarily sintered powder material 32 is melted and solidified by irradiation with the electron beam 15, the powder material 32 as a temporarily sintered body is primarily sintered.

In step S6, the beam irradiation device 2 specifies a build region on the basis of two-dimensional data obtained by a process in which three-dimensional CAD data of a target build object 38 is sliced to a certain thickness (a thickness corresponding to ΔZ), and scans the electron beam 15 over the build region to selectively melt the powder material 32 on the build plate 22. The powder material 32 melted by irradiation with the electron beam 15 solidifies after the electron beam 15 passes. Thereby, a build object of the first layer is formed.

When the process of step S6 is completed, next, a backscattered electron image (BSE image) after melting, that is, a post-melting BSE image is acquired (step S7). In step S7, first, the beam irradiation device 2 operates on the basis of a control command given from the polarization amplifier control circuit 101 and the PC 104, and thereby scans the electron beam 15 over a temporarily sintered region where the temporarily sintered powder material 32 is present. At this time, the beam irradiation device 2 sets the electron beam current of the electron beam 15 as small as possible, and performs irradiation while placing the focus on the build surface 32a. Then, the detection unit 46 detects backscattered electrons generated by the electron beam 15.

Further, the detection unit 46 outputs the detected backscattered electron signal to the PC 104 via the Pre-AMP 103 and the ADC 102. Then, the image processing unit of the PC 104 performs arithmetic processing on the backscattered electron signal acquired from the detection unit 46, and acquires a backscattered electron image (BSE image).

Next, the PC 104 compares the post-preceding-layer-melting BSE image and the pre-current-melting BSE image, and sets the amount of the powder material 32 to be supplied from the powder supply device 16 in the following layer (step S8). In step S8, the PC 104 acquires, from the storage unit, the post-preceding-layer-melting BSE image acquired in step S7 when the preceding layer was formed. Further, the PC 104 acquires, from the storage unit, the pre-melting BSE image acquired in step S4 when forming the current layer. Then, the PC 104 compares the two BSE images to determine the degree of spreading of the powder material 32, and sets the amount of powder to be supplied in step S2 of forming the following layer.

Here, in the case where the difference between the two BSE images is minute, the PC 104 determines that the powder material 32 was not appropriately spread in the current step S2. Then, the PC 104 sets an amount equivalent to two layers of powder to be supplied in step S2 in the following layer.

The step of setting the amount of powder to be supplied, which is shown in step S8, may be performed after the process of step S4 of acquiring the pre-current-melting BSE image. In this case, if the powder is not appropriately spread, the melting current used in melting performed immediately thereafter may be reduced, and thereby the influence on the build object 38 can be reduced to the minimum.

Next, as preparation for spreading the powder material 32, after-heating (A.H.) of heating the build surface 32a is performed (step S9). In step S9, the beam irradiation device 2 operates under the control of the polarization amplifier control circuit 101 and the PC 104, and thereby irradiates the build surface 32a with the electron beam 15 through the opening 30a of the electron shield 30. At this time, the polarization amplifier control circuit 101 defocuses the electron beam 15 by means of an objective lens or the like included in the beam irradiation device 2. This defocusing brings about a state where the in-focus position of the electron beam 15 is shifted downward from the build surface 32a, that is, an underfocus state.

The polarization amplifier control circuit 101 and the PC 104 control the beam irradiation device 2 to scan the electron beam 15 as large as the opening 30a of the electron shield 30. Thereby, the entire region of the build surface 32a exposed to the opening 30a is irradiated with the electron beam 15.

The build surface 32a is heated to such a temperature that the powder material 32 is temporarily sintered. When the build surface 32a is heated to a predetermined temperature, the beam irradiation device 2 stops the irradiation with the electron beam 15.

In the case where it is determined in step S8 that the powder material 32 is not appropriately spread, an amount equivalent to two layers of the powder material is to be spread in the following layer. Thus, the time of after-heating in step S9 is set longer than that in the normal case, and the temperature of the build surface 32a is made higher. Thereby, in step S2 of the following layer, even when an increased amount equivalent to two layers of the powder material 32 is spread, the temperature of the build surface 32a can be prevented from excessively lowering.

Next, the build plate 22 is lowered by a predetermined amount (ΔZ) (step S10). In step S10, the plate movement device 26 lowers the inner base 24 by ΔZ so that the build surface 32a is slightly lower than the upper surface of the powder material 32 spread over the build table 18.

After that, the processes of steps S2 to S11 above are repeated until building is completed up to the final layer in step S11, that is, the building of the build object 38 is completed. The building of the build object 38 is completed at the stage when the necessary number of layers of the powder material 32 to build the build object 38 are melted and solidified. Thereby, the target build object 38 is obtained.

Thus, by the operation example of the three-dimensional PBF-AM apparatus 1 of the present example, the condition of spreading of the powder material 32 and the condition of melting of the build object 38 are determined in steps S5 and S8 before and after melting in step S6. Then, the amount of the powder material 32 to be supplied in the following layer and melting conditions are set as necessary, and correction is performed. Thereby, the number of times the building of the build object 38 fails can be reduced.

Further, the work of correcting the build process related to a problem such as the powder material 32 not being appropriately spread or not being appropriately melted is performed in the following layer instead of the layer in which the problem occurs. Further, the correction work is performed by changing the amount of the powder material 32 to be supplied in the following layer or melting conditions of the melting step. Thereby, correction work for the build operation can be always performed at the same timing, and correction work can be performed without deteriorating throughput.

Further, by performing correction work in the following layer, it becomes unnecessary that, after subjected to temporary sintering, the same layer be further subjected to a heating step that promotes temporary sintering. Thereby, the temporarily sintered body can be prevented from becoming harder than necessary, and blasting treatment performed after the three-dimensional build operation can be easily performed. Further, a situation where the mechanical characteristics of a build object 38 subjected to correction work are different from those of a build object 38 successfully formed without performing correction work can be suppressed.

Although an example in which BSE images are used to perform the determination of steps S5 and S8 has been described, the present invention is not limited thereto. For example, the determination of steps S5 and S8 may be performed using backscattered electron signals (backscattered electron information) detected by the detection unit 46 without performing image conversion processing on the backscattered electron signals.

### 2. Examples of backscattered electron images

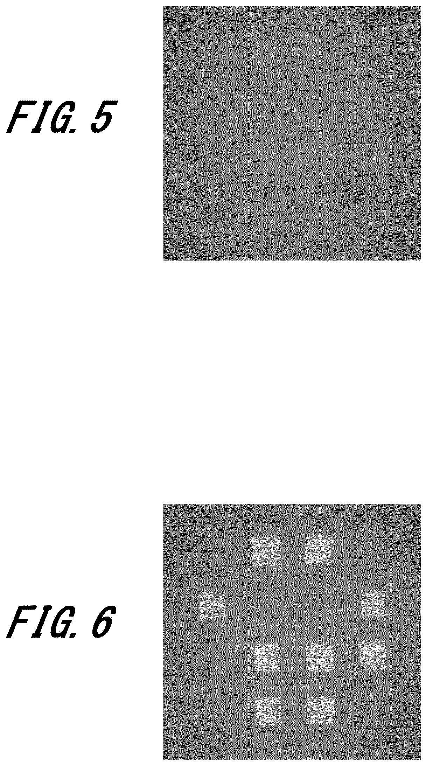

Next, examples of backscattered electron images (BSE images) acquired by steps S4 and S7 are described with reference to FIGS. 5 to 7.

FIG. 5 shows an example of a backscattered electron image acquired after powder-heating.

The image processing unit performs arithmetic processing on backscattered electron signals acquired from a plurality of detection units 46a, 46b, 46c, and 46d to generate a backscattered electron image. Here, in the backscattered electron image acquired in step S4 after powder-heating, the image processing unit performs addition of a first backscattered electron signal A of the first detection unit 46a and a second backscattered electron signal B of the second detection unit 46b, the first detection unit 46a and the second detection unit 46b being arranged to face each other. That is, the arithmetic expression is A + B. It is also possible to perform addition of a third backscattered electron signal C of the third detection unit 46c and a fourth backscattered electron signal D of the fourth detection unit 46d (C + D), the third detection unit 46c and the fourth detection unit 46d being arranged to face each other. By such an arithmetic expression, a backscattered electron image in which the contour of the build object 38 is emphasized can be acquired. As a result, whether the powder material 32 is appropriately spread or not can be easily checked, and the processing of determining the condition of appropriate spreading of the powder material 32 by the PC 104 can be accurately performed in the process of step S8.

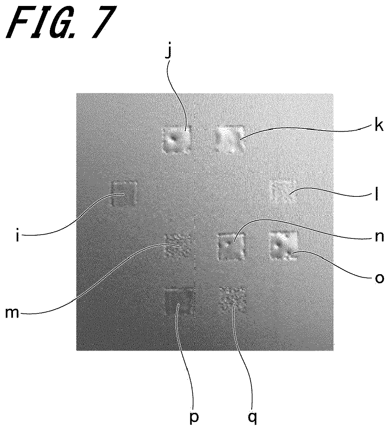

FIG. 7 shows an example of a backscattered electron image acquired after melting.

In the backscattered electron image acquired in step S7 after melting, the image processing unit performs subtraction of a first backscattered electron signal A and a second backscattered electron signal B. Alternatively, the image processing unit performs subtraction of a third backscattered electron signal C and a fourth backscattered electron signal D. Thereby, a backscattered electron image in which the unevenness of the build surface 32a of the build object 38 is emphasized can be acquired.

As the arithmetic expression, also (A - B)/(A + B) or (C - D)/(C + D) may be used. That is, by dividing a subtraction signal of two backscattered electron images by an addition signal of two backscattered electron images, the fluctuation of the electron beam current and the influence of noise can be suppressed. Thereby, as shown in FIG. 7, a backscattered electron image in which the unevenness of the build surface 32a of the build object 38 is emphasized can be acquired. As a result, whether the powder material 32 is appropriately melted or not can be checked more easily, and the processing of determining the degree of melting of the powder material 32 by the PC 104 can be accurately performed in the process of step S5.

### 3. Example of determination of the condition of spreading of the powder material

Next, an example of determination of the condition of spreading of the powder material 32 performed in step S8 is described with reference to FIGS. 5 and 6.

FIG. 6 is a backscattered electron image acquired after powder-heating, and shows an example in which the powder material 32 is not appropriately spread. The backscattered electron image shown in FIG. 6 is a backscattered electron image acquired by the arithmetic expression A + B.

When the powder material is appropriately spread, the backscattered electron image is an image in which almost the entire screen is black (see FIG. 5). When the powder material is not spread at all, as shown in FIG. 6, an image in which all the portions melted in the preceding layer are white and the other area is black is obtained. When spreading is performed partially, an image in which some of the portions melted in the preceding layer (portions where the powder material is spread) are black, the others of the melted portions (portions where the powder material 32 is not spread) are white, and all the other portions of the powder material 32 are black is obtained.

Here, xyz three-dimensional coordinates are envisaged. Data of a BSE image after melting of the preceding layer and a BSE image before melting of the current layer is converted into numbers in the form of (x, y, z) in all the number of pixels, and is converted into xyz three-dimensional data. That is, the position as the x coordinate of the BSE image, the position as the Y coordinate of the BSE image, and the brightness/darkness value of the BSE image corresponding to the X coordinate and the Y coordinate are set. At this time, it is assumed that the whiter the image is, the larger the brightness/darkness value is, and the blacker the image is, the smaller the brightness/darkness value is.

Then, the difference between the values of the z coordinate corresponding to the same xy coordinates of the two pieces of three-dimensional data (the brightness/darkness values of the BSE images corresponding to the X coordinate and the Y coordinate) is taken, and thus three-dimensional data is derived. In the three-dimensional data obtained by taking the difference between the BSE image after melting of the preceding layer and the BSE image before melting of the current layer, the values of the z coordinate (brightness/darkness values) of the two pieces of three-dimensional data are almost the same in any xy coordinates if the powder material is not spread. Therefore, the value of the z coordinate is expected to take a value close to 0 in any xy coordinates.

On the other hand, when the powder material 32 is appropriately spread, the portion of the build object that was white in the preceding layer becomes black; therefore, in the three-dimensional data obtained by taking the difference, the value of the z coordinate in the xy coordinates indicating the position of the build object is a brightness/darkness value indicating the difference between white and black (a value surely larger than 0). Thus, attention is paid to two values. The first value is the z coordinate of three-dimensional data obtained by taking data of differences (difference values in brightness and darkness between two BSE images). Then, a threshold is set for this value. The second value is a value (hereinafter, referred to as a powder spreading ratio) obtained by a process in which the total value of the number of pixels exceeding the threshold of the z coordinate (the difference value in brightness and darkness between two BSE images) of three-dimensional data obtained by taking data of differences is divided by the total value of the number of pixels of portions where the BSE image becomes white due to the presence of the build object of the preceding layer. The design is made such that a threshold can be set also for the powder spreading ratio; when the value of the powder spreading ratio is smaller than this threshold, it is determined that the powder is not appropriately spread. Thereby, the determination of the degree of spreading of the powder material 32 performed in step S8 can be performed.

### 4. Example of determination of the degree of melting of the powder material

Next, an example of determination of the degree of melting of the powder material 32 performed in step S5 is described with reference to FIG. 7.

FIG. 7 is a backscattered electron image acquired after melting. FIG. 7 shows an example in which both portion (i) where the powder material is relatively appropriately melted and portions (j) to (q) where the powder material is not appropriately melted are included. The backscattered electron image shown in FIG. 7 is a backscattered electron image acquired by the arithmetic expression (A - B)/(A + B).

When the powder material 32 is appropriately melted, the outermost surface of the build surface 32a is flat as shown in portion (i) of FIG. 7. As shown in portions (j) to (q) of FIG. 7, when melting is not appropriately performed, the outermost surface of the build surface 32a has severe unevenness. Here, the unevenness of the outermost surface can be regarded as a three-dimensional wave. Thus, the maximum amplitude and the maximum period of the three-dimensional wave are obtained. The unevenness of the outermost surface can be converted into numbers in the form of xyz three-dimensional coordinates (x, y, z) in all the number of pixels, and can be converted into xyz three-dimensional data. That is, the brightness/darkness value of the BSE image corresponding to the X coordinate and the Y coordinate, i.e., the position as the X coordinate of the BSE image and the position as the Y coordinate of the BSE image is set.

Then, the maximum amplitude and the maximum period are obtained from the three-dimensional data. Thresholds are set for the amplitude and the period; when both or one of the thresholds is exceeded, it is determined that the powder material 32 is not appropriately melted. Thereby, the determination of the degree of melting of the powder material 32 performed in step S5 can be performed.

The present invention is not limited to the embodiments described above and shown in the drawings, and can be variously modified and implemented without departing from the gist of the invention described in the claims.

Although in the above-described embodiments an example in which a metal powder of titanium, aluminum, iron, or the like, for example, is used as a powder material is described, the present invention is not limited thereto, and a resin or the like may be used as a powder material. Further, although an example in which an electron gun that applies an electron beam is used as a heating mechanism that preheats or melts a powder material has been described, the present invention is not limited thereto. As the heating mechanism, for example, a laser irradiation unit that applies laser light may be used.

Further, although in the above-described embodiments an example in which the detection unit 46 is placed inside the radiation shielding cover 28 is described, the present invention is not limited thereto. The detection unit 46 may be placed outside the radiation shielding cover 28.

Further, although an example in which the PC 104 is used as the control unit has been described, the present invention is not limited thereto. As the control unit, a control unit having various other arithmetic functions, such as an electron beam control unit that controls the beam irradiation device 2, can be used.

Some or all of the above components, functions, processing units, etc. may be obtained by hardware, for example, by designing an integrated circuit or the like. Further, the above components, functions, etc. may be obtained by software by a processor interpreting and executing a program that implements each function. Information such as a program, a table, and a file that implement each function can be put in a recording device such as a memory, a hard disk, or an SSD (solid-state drive), or a recording medium such as an IC card, an SD card, or a DVD.

Although in the present specification words such as "parallel" and "orthogonal" are used, each of these does not mean only strict "parallel" or "orthogonal", and may be a state of "substantially parallel" or "substantially orthogonal" including "parallel" or "orthogonal" and falling within a range in which the function can be exhibited.

### Description of Reference Numerals

- 1: three-dimensional PBF-AM apparatus
- 2: beam irradiation device
- 3: vacuum chamber
- 15: electron beam
- 16: powder supply device
- 16a: hopper
- 16b: powder dropper
- 16c: recoater
- 16d: blade
- 18: build table
- 20: build box
- 21: collection box
- 22: build plate
- 24: inner base
- 26: plate movement device
- 32: powder material
- 32a: build surface
- 38: build object
- 42: camera
- 44: shutter
- 46: detection unit
- 101: polarization amplifier control circuit
- 102: digital conversion circuit (ADC)
- 103: preamplifier (Pre-AMP)
- 104: personal computer (PC, control unit)
- 105: display unit
- 106: display screen

## Claims

1. A three-dimensional powder bed fusion additive manufacturing (PBF-AM) apparatus (1) comprising:
a build plate (22);
a powder supply device (16) configured to supply a powder material (32) to the build plate (22) to form a powder layer;
a beam irradiation device (2) configured to irradiate the powder layer with an electron beam (15);
a detection unit (46) configured to detect backscattered electrons generated when the electron beam (15) is applied to the powder material (32); and
a control unit (104) configured to control the beam irradiation device (2),
wherein the control unit (104)
acquires a post-melting-of-preceding-layer backscattered electron signal that is a backscattered electron signal detected by the detection unit (46) after the powder material (32) was melted by the electron beam (15) in a step of building a layer preceding a current layer, and
on the basis of the post-melting-of-preceding-layer backscattered electron signal, sets a condition for controlling the beam irradiation device (2) in a melting step in a step of building the current layer.

2. The three-dimensional PBF-AM apparatus (1) according to claim 1, wherein
the control unit (104) controls the powder supply device (16) and acquires a pre-melting backscattered electron signal that is a backscattered electron signal detected by the detection unit (46) in a period after the powder material (32) is spread by the powder supply device (16) and before the powder material (32) is melted by the electron beam (15), and
on the basis of the pre-melting backscattered electron signal and the post-melting-of-preceding-layer backscattered electron signal, sets an amount of the powder material (32) to be supplied from the powder supply device (16) in a step of building a following layer.

3. The three-dimensional PBF-AM apparatus (1) according to claim 2, wherein
the control unit (104) includes an image processing unit that generates backscattered electron images on the basis of the pre-melting backscattered electron signal and the post-melting-of-preceding-layer backscattered electron signal.

4. The three-dimensional PBF-AM apparatus (1) according to claim 1, wherein
a plurality of detection units (46) are provided, and
the control unit (104) performs arithmetic processing on a plurality of backscattered electron signals detected by a plurality of detection units (46).

5. A method for controlling a three-dimensional PBF-AM apparatus (1), the method comprising:
a step of using a powder supply device (16) to supply a powder material (32) to a build plate (22) to form a powder layer;
a step of acquiring a post-melting-of-preceding-layer backscattered electron signal that is a backscattered electron signal detected by a detection unit (46) after the powder material (32) was melted by an electron beam (15) in a step of building a layer preceding a current layer; and
a melting step of using a beam irradiation device (2) to irradiate the powder layer with the electron beam (15) to melt the powder material (32),
wherein on the basis of the post-melting-of-preceding-layer backscattered electron signal, a condition for controlling the beam irradiation device (2) in the melting step in a step of building the current layer is set.

6. The method for controlling a three-dimensional PBF-AM apparatus (1) according to claim 5, further comprising:
a step of acquiring a pre-melting backscattered electron signal that is a backscattered electron signal detected by the detection unit (46) in a period after the powder material (32) is spread by the powder supply device (16) and before the powder material (32) is melted by an electron beam (15); and
a step of, on the basis of the pre-melting backscattered electron signal and the post-melting-of-preceding-layer backscattered electron signal, setting an amount of the powder material (32) to be supplied from the powder supply device (16) in a step of building a following layer.
